# EUROPÄISCHE PATENTANMELDUNG

(11) **EP 2 757 333 A1**
(43) Veröffentlichungstag der Anmeldung: **23.07.2014**
(21) Anmeldenummer: 13197660.7
(22) Anmeldetag: 17.12.2013
(51) Int. Cl.: F25B 41/06

(54) **Elektronisches Expansionsorgan**

(30) Priorität: 17.01.2013 DE 102013200679
(71) Anmelder: Honeywell Technologies Sarl, 1110 Morges (CH)
(72) Erfinder: Edelmann, Steffen, 69429 Waldbrunn (DE); Baier, Doris, 74831 Gundelsheim (DE); Ackermann, Michael, 74722 Buchen-Hainstadt (DE); Dalkidis, Charilaos, 68723 Schwetzingen (DE)
(74) Vertreter: TBK

(57) **Zusammenfassung**

Ein elektronisches Expansionsorgan umfasst einen ersten Ein-/Auslassstutzen sowie einen zweiten Ein-/Auslassstutzen zum Zu-/Abführen von Kältemittel in das/aus dem Expansionsorgan, einen Spindelmechanismus, ein durch den Spindelmechanismus in axialer Richtung verstellbares Nadelventil, und ein Gehäuse, das den Spindelmechanismus beherbergt, und an dem der erste und zweite Ein/Auslassstutzen angebracht ist. Der erste Ein-/Auslassstutzen ist an einem Ende des Gehäuses angebracht, und der zweite Ein-/Auslassstutzen ist am gegenüberliegenden Ende des Gehäuses angebracht, so dass das Kältemittel in Abhängigkeit von der Nadelventilstellung einen Ein-/Auslassstutzen, das Gehäuse und den anderen Ein-/Auslassstutzen durchströmt.

## Beschreibung

Die vorliegende Erfindung betrifft ein elektronisches Expansionsorgan, das vorzugsweise in einem Kältemittelkreislauf einer Wärmepumpenanlage oder einer Kühleinrichtung zur Steuerung und Regelung eines Massenstroms von Kältemittel verwendet wird.

In einer Wärmepumpe bzw. Kühleinrichtung sind ein oder mehrere Verdampfer, ein oder mehrere Verdichter, ein oder mehrere Kondensator/en bzw. Verflüssiger und ein oder mehrere durch ein Regelgerät regelbare/s Expansionsorgan/e in einem geschlossenen Kreislauf hintereinander angeordnet.

Die Hauptaufgabe des Expansionsorgans besteht dabei, den Kältemittelmassenstrom derart anzupassen, dass unter hohem Druck stehendes Kältemittel mit hoher Temperatur auf niedrigen Druck und niedrige Temperatur geregelt wird.

Aus dem Stand der Technik sind elektronische Expansionsventile als Expansionsorgan bekannt, die mittels eines Schrittmotors eine Anpassung des Massendurchflusses von Kältemittel ermöglichen. So beschreibt beispielsweise die Druckschrift WO 2011-062944 ein elektronisch gesteuertes Expansionsventil, dessen Ventilstellung mittels eines Schrittmotors und nachgeschaltetem Getriebe erfolgt. Weiterhin beschreibt beispielsweise die Druckschrift CN 102252470 A die Verwendung eines Spindelantriebs zum Durchführen einer axialen Bewegung eines Nadelventils zum Regeln der Düsenöffnung eines Expansionsventils.

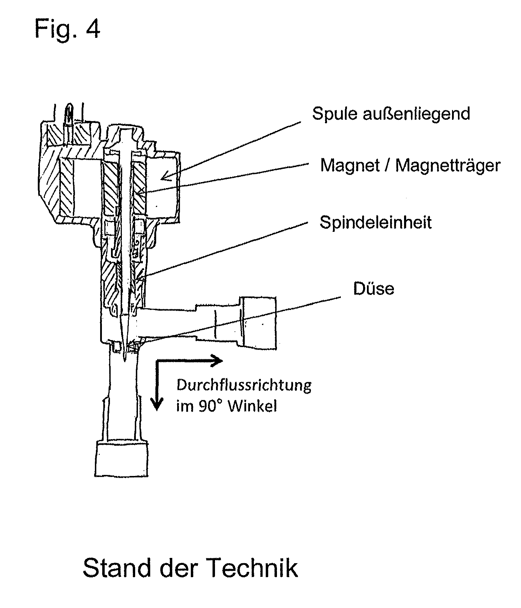

Fig. 4 zeigt ein elektronisches Expansionsventil gemäß dem Stand der Technik mit einer außenliegenden Spule, einem Magneten/Magnetträger, einer Spindeleinheit und einer Düse. Die Durchflussrichtung gemäß den bekannten Expansionsventilen erfolgt im 90° Winkel.

Jedoch kann es bei elektronischen Expansionsventilen vorkommen, dass der Antrieb bzw. das Stellglied beispielsweise aufgrund von Verschmutzung oder übermäßiger Wärmeentwicklung bei einer Drehung behindert werden oder sogar stecken bleiben, so dass eine ausreichende Bewegung des Ventils nicht mehr gewährleistet ist.

Andererseits ist die Positionierung des Expansionsorgans in einem Kältemittelkreislauf aufgrund der Konstruktion und des Designs des elektronischen Expansionsorgans bzw. dessen Antriebseinheit begrenzt.

Daher ist es eine Aufgabe der vorliegenden Erfindung, ein elektronisches Expansionsorgans bereitzustellen, das eine flexiblere Montageposition bei Anwendung beispielsweise in einem Kältemittelkreislauf ermöglicht, und das weniger anfällig bezüglich eines Blockierens bzw. Steckenbleibens von Ventil- bzw. Antriebselementen ist.

Diese Aufgabe ist erfindungsgemäß durch ein elektronisches Expansionsorgan nach Patentanspruch 1 gelöst.

Weitere Merkmale und vorteilhafte Ausgestaltungen sind in den abhängigen Patentansprüchen gezeigt.

Gemäß der vorliegenden Erfindung ist ein elektronisches Expansionsorgan für einen Kältemittelkreislauf umfassend mindestens einen Verdichter, einen Verflüssiger und einen Verdampfer, zum Steuern eines Massenstroms von Kältemittel bereitgestellt, das einen ersten Ein-/Auslassstutzen zum Zu-/Abführen des Kältemittels in das/aus dem Expansionsorgan, einen zweiten Ein-/Auslassstutzen zum Zu-/Abführen des Kältemittels in das/aus dem Expansionsorgan, einen Spindelmechanismus, ein durch den Spindelmechanismus in axialer Richtung verstellbares Nadelventil, und ein Gehäuse, das den Spindelmechanismus beherbergt und an dem der erste und zweite Ein-/Auslassstutzen angebracht ist, aufweist.

Der erste Ein-/Auslassstutzen ist an einem Ende des Gehäuses angebracht, und der zweite Ein-/Auslassstutzen ist am gegenüberliegenden Ende des Gehäuses angebracht, so dass das Kältemittel in Abhängigkeit von der Nadelventilstellung einen Ein-/Auslassstutzen, das Gehäuse und den anderen Ein-/Auslassstutzen durchströmt.

Vorteilhafterweise verläuft die Durchflussrichtung des Kältemittels im Wesentlichen gerade.

Weiterhin gilt vorzugsweise, dass der erste Ein-/Auslassstutzen, das Nadelventil, der Spindelmechanismus und der zweite Ein-/Auslassstutzen einachsig angeordnet sind.

Dabei kann erfindungsgemäß die Durchströmung des Kältemittels entweder in der Richtung erster Ein-/Auslassstutzen, Gehäuse und zweiter Ein-/Auslassstutzen oder in der Richtung zweiter Ein-/Auslassstutzen, Gehäuse und erster Ein-/Auslassstutzen erfolgen.

Vorzugsweise ist an der Gehäuseseite, an der der erste Ein-/Auslassstutzen angebracht ist, eine Düse ausgebildet, deren Öffnung durch die Stellung des Nadelventils variierbar ist.

Gemäß einem Ausführungsbeispiel der vorliegenden Erfindung wird der Spindelmechanismus durch einen Spindelantrieb angetrieben, der einen Schrittmotor mit außenliegender Spule, einem von einem Magnetträger gehaltenen Magneten und eine Rotoreinheit umfasst.

Vorzugsweise umströmt das Kältemittel den Spindelmechanismus und die sich in dem Gehäuse befindlichen Elemente des Spindelantriebs.

Gemäß einem weiteren Ausführungsbeispiel umfasst das Kältemittel ein Kältemittel-Öl-Gemisch, und das Kältemittel-Öl-Gemisch umströmt den Spindelmechanismus und die sich in dem Gehäuse befindlichen Elemente des Spindelantriebs. Der erste Ein-/Auslassstutzen und der zweite Ein-/Auslassstutzen können jeweils an der dem Gehäuse abgewandten Seite eine Anschlusseinrichtung aufweisen, um das elektronische Expansionsorgan an einer Kältemittelverrohrung anzuschließen.

Weiterhin ist gemäß einem Ausführungsbeispiel der vorliegenden Erfindung das elektronische Expansionsorgan weiterhin mit einem Stecker zum Übertragen von Steuersignalen und Versorgungsenergie für den Spindelantrieb ausgestattet.

Dadurch kann ein elektronisches Expansionsorgan bereitgestellt werden, in dem die Antriebseinheit des Nadelventils im Durchflusspfad des Kältemittels liegt, was eine Kühlung und/oder Schmierung der beweglichen Bauteile ermöglicht, wodurch die Robustheit des Expansionsorgans verbessert wird.

Weiterhin ermöglicht die gerade Bauform des Expansionsorgans einen einfachen und flexiblen Einbau in ein Rohrsystem, wobei zusätzlich eine bessere Durchströmung in beiden Richtungen ("biflow") erreicht wird.

Im Folgenden ist die Erfindung anhand bevorzugter Ausführungsbeispiele mit Bezugnahme auf die anhängenden Figuren beschrieben, in denen identische Bezugszeichen gleiche Elemente bezeichnen.

In den Figuren gilt:
Fig. 1 zeigt schematisch einen Kältemittelkreislauf;
Fig. 2 zeigt schematisch ein elektronisches Expansionsorgan gemäß einem Ausführungsbeispiel der vorliegenden Erfindung;
Fig. 3 zeigt schematisch ein elektronisches Expansionsorgan gemäß einem weiteren Ausführungsbeispiel der vorliegenden Erfindung;
Fig. 4 zeigt eine schematische Darstellung eines elektronischen Expansionsorgans gemäß dem Stand der Technik.

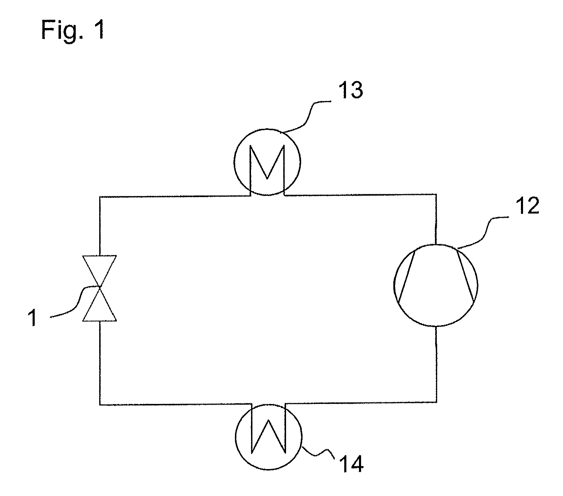

Ein erfindungsgemäßes elektronisches Expansionsorgan 1 wird beispielsweise im Kältemittelkreislauf einer Wärmepumpe bzw. Kühleinrichtung verwendet. Fig. 1 zeigt schematisch einen Kältemittelreislauf. Darin sind ein oder mehrere Verdampfer 14, ein oder mehrere Verdichter 12, ein oder mehrere Kondensator/en bzw. Verflüssiger 13 und ein oder mehrere durch beispielsweise ein Regelgerät regelbare/s Expansionsorgan/e 1 in einem geschlossenen Kreislauf hintereinander angeordnet.

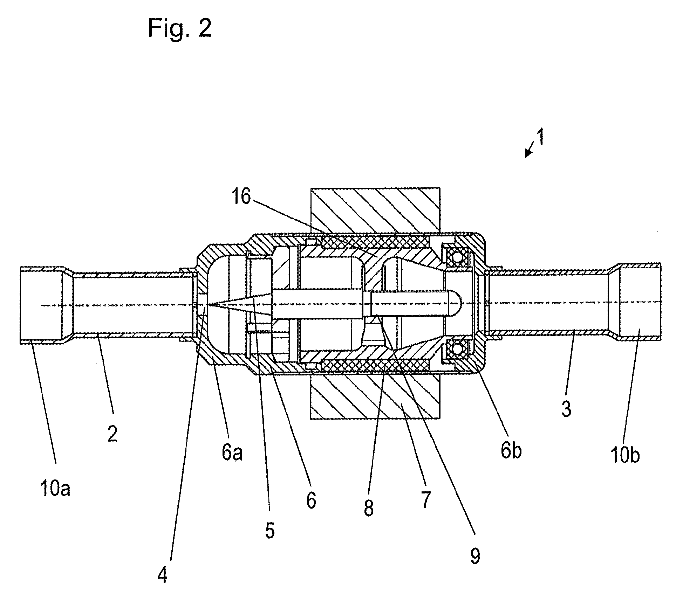

Fig. 2 zeigt schematisch ein elektronisches Expansionsorgan gemäß einem Ausführungsbeispiel der vorliegenden Erfindung.

Das elektronische Expansionsorgan gemäß dem Ausführungsbeispiel weist ein Gehäuse 6 auf, an dem eine Düse 4 ausgebildet ist, deren Öffnung mittels eines Nadelventils 5 einstellbar ist, wobei die Erfindung nicht auf ein Nadelventil beschränkt ist und andere geeignete Düsenöffnungs-anpassungselemente verwendet werden können. Das Nadelventil 5 wird über einen Spindelantrieb derart axial bewegt, dass das beispielsweise konisch geformte Nadelventil 5 in die Düsenöffnung eindringt, um so die Öffnung der Düse 4 anzupassen.

Gemäß dem vorliegenden Ausführungsbeispiel erfolgt der Antrieb des Spindelmechanismus 9 über einen Schrittmotor mit außenliegender Spule 7 und einem durch einen Magnetträger gehaltenen Magneten 8, der an einem Rotorelement 16 innerhalb des Gehäuses angebracht ist.

Der Schrittmotor ermöglicht eine präzise Einstellung der Düsenöffnung, und die Anordnung der Spulen außerhalb des Gehäuses 6 gewährleistet, dass durch den Flüssigkeitsstrom innerhalb des Gehäuses 6 kein elektrischer Kurzschluss erfolgt.

Wenn der Schrittmotor betätigt wird, wird das Rotorelement 16 durch eine über die Spule 7 und den Magneten 8 wirkende elektromagnetische Kraft in Drehung versetzt, wodurch durch den Spindelmechanismus 9, der sich über ein Gewinde in Eingriff mit dem Rotorelement 16 befindet, die Drehung in eine axiale Bewegung der Spindel umgewandelt wird.

An der Seite des Gehäuses 6a, an der die Düsenöffnung ausgebildet ist, ist ein erster Ein-/Auslassstutzen 2 angebracht. An der entgegengesetzten Seite des Gehäuses, d.h. an der gegenüberliegenden Seite des Gehäuses 6b, an dem die Düsenöffnung 4 angebracht ist, ist ein zweiter Ein-/Auslassstutzen 3 angebracht.

Bei geöffneter Düse kann somit das Kältemittel den ersten Ein-/Auslassstutzen, das Gehäuse und den zweiten Ein-/Auslassstutzen in dieser oder der entgegengesetzten Richtung durchströmen.

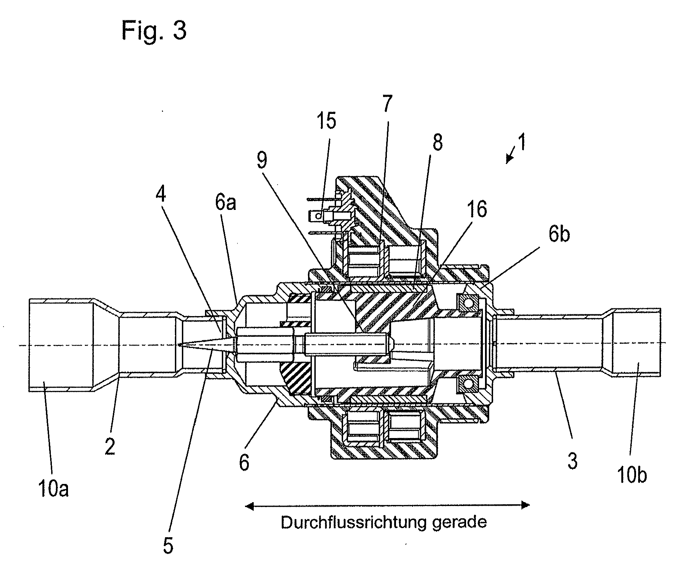

Fig. 3 zeigt schematisch ein elektronisches Expansionsorgan gemäß einem weiteren Ausführungsbeispiel der vorliegenden Erfindung, das eine Weiterbildung des vorstehen beschriebenen Ausführungsbeispiels darstellt.

Wie in Fig. 3 gezeigt ist, verläuft die Durchflussrichtung des Kältemittels im Wesentlichen gerade. Vorzugsweise ist dabei der erste Ein-/Auslassstutzen 2, das Nadelventil 5, der Spindelmechanismus 9 und der zweite Ein-/Auslassstutzen 3 einachsig angeordnet.

In Betrieb umströmt das Kältemittel den Spindelmechanismus 9 und die sich in dem Gehäuse 6 befindlichen Elemente des Spindelantriebs, wodurch eine optimale Kühlung gewährleistet wird.

Weiterhin kann das Kältemittel ein Kältemittel-Öl-Gemisch umfassen, wobei dieses Kältemittel-Öl-Gemisch den Spindelmechanismus und die sich in dem Gehäuse befindlichen Elemente des Spindelantriebs umströmt, wodurch zusätzlich eine Schmierung der beweglichen Bauteile erfolgt.

Der erste Ein-/Auslassstutzen 2 und der zweite Ein-/Auslassstutzen 4 weisen jeweils an der dem Gehäuse 6 abgewandten Seite eine Anschlusseinrichtung 10a, 10b auf, über die das elektronische Expansionsorgan 1 an einer Kältemittelverrohrung angeschlossen werden kann.

Das elektronische Expansionsorgan 1 gemäß dem gegenwärtigen Ausführungsbeispiel weist einen Stecker 15 zum Übertragen von Steuersignalen und Versorgungsenergie für den Spindelantrieb auf. Der Stecker kann mehrpolig ausgebildet sein, und es können ebenfalls beispielsweise Sensorsignale von sich in dem Expansionsorgan befindlichen Sensoren (nicht gezeigt) übertragen werden.

Das erfindungsgemäße elektronische Expansionsorgan weist gemäß bevorzugten Ausführungsbeispielen einen Schrittmotor mit außenliegender Spule auf, der ein Nadelventil über einen Spindelantrieb justieren kann.

Ein vorteilhafter Effekt der vorliegenden Erfindung ist, dass der Motor durch Kältemittel oder Kältemittel-Öl-Gemisch durchströmt wird. Weiterhin ist durch die erfindungsgemäße Konstruktion ein Bi-Flow-Verhalten ohne Leistungsverslust möglich. Ein weiterer Vorteil ist, dass das erfindungsgemäße elektronische Expansionsorgan wie ein Rohrstück in eine Kältemittelverrohrung integriert werden kann, wobei eine beliebige Einbaulage möglich ist.

Ein elektronisches Expansionsorgan umfasst einen ersten Ein-/Auslassstutzen sowie einen zweiten Ein-/Auslassstutzen zum Zu-/Abführen von Kältemittel in das/aus dem Expansionsorgan, einen Spindelmechanismus, ein durch den Spindelmechanismus in axialer Richtung verstellbares Nadelventil, und ein Gehäuse, das den Spindelmechanismus beherbergt, und an dem der erste und zweite Ein-/Auslassstutzen angebracht ist. Der erste Ein-/Auslassstutzen ist an einem Ende des Gehäuses angebracht, und der zweite Ein-/Auslassstutzen ist am gegenüberliegenden Ende des Gehäuses angebracht, so dass das Kältemittel in Abhängigkeit von der Nadelventilstellung einen Ein-/Auslassstutzen, das Gehäuse und den anderen Ein-/Auslassstutzen durchströmt.

## Patentansprüche

1. Elektronisches Expansionsorgan (1) für einen Kältemittelkreislauf umfassend mindestens einen Verdichter (12), einen Verflüssiger (13) und einen Verdampfer (14), zum Steuern eines Massenstroms von Kältemittel, mit:
einem ersten Ein-/Auslassstutzen (2) zum Zu-/Abführen des Kältemittels in das/aus dem Expansionsventil (1),
einem zweiten Ein-/Auslassstutzen (3) zum Zu-/Abführen des Kältemittels in das/aus dem Expansionsventil (1),
einem Spindelmechanismus (9),
einem durch den Spindelmechanismus (9) in axialer Richtung verstellbaren Nadelventil (5), und
einem Gehäuse (6), das den Spindelmechanismus beherbergt, und an dem der erste und zweite Ein-/Auslassstutzen (2; 3) angebracht ist,
**dadurch gekennzeichnet, dass**
der erste Ein-/Auslassstutzen (2) an einem Ende des Gehäuses (6a) angebracht ist, und der zweite Ein-/Auslassstutzen (3) am gegenüberliegenden Ende des Gehäuses (6b) angebracht ist, so dass das Kältemittel in Abhängigkeit von der Nadelventilstellung einen Ein-/Auslassstutzen (2; 3), das Gehäuse (6) und den anderen Ein-/Auslassstutzen (3; 2) durchströmt.

2. Elektronisches Expansionsorgan gemäß Anspruch 1, wobei die Durchflussrichtung des Kältemittels im Wesentlichen gerade verläuft.

3. Elektronisches Expansionsorgan gemäß Anspruch 1 oder 2, wobei der erste Ein-/Auslassstutzen (2), das Nadelventil (5), der Spindelmechanismus und der zweite Ein-/Auslassstutzen (3) einachsig angeordnet sind.

4. Elektronisches Expansionsorgan gemäß einem der Ansprüche 1 bis 3, wobei die Durchströmung des Kältemittels entweder in der Richtung erster Ein-/Auslassstutzen (2), Gehäuse (6) und zweiter Ein-/Auslassstutzen (3) oder in der Richtung zweiter Ein-/Auslassstutzen (3), Gehäuse (6) und erster Ein-/Auslassstutzen (2) erfolgt.

5. Elektronisches Expansionsorgan gemäß einem der Ansprüche 1 bis 4, wobei an der Gehäuseseite (6a), an der der erste Ein-/Auslassstutzen angebracht ist, eine Düse (4) ausgebildet ist, deren Öffnung durch die Stellung des Nadelventils (5) variierbar ist.

6. Elektronisches Expansionsorgan gemäß einem der Ansprüche 1 bis 5, wobei der Spindelmechanismus (9) durch einen Spindelantrieb angetrieben wird, der einen Schrittmotor mit außenliegender Spule (7), einem von einem Magnetträger gehaltenen Magneten (8) und eine Rotoreinheit (16) umfasst.

7. Elektronisches Expansionsorgan gemäß Anspruch 6, wobei das Kältemittel den Spindelmechanismus (9) und die sich in dem Gehäuse (6) befindlichen Elemente des Spindelantriebs umströmt.

8. Elektronisches Expansionsorgan gemäß Anspruch 7, wobei das Kältemittel ein Kältemittel-Öl-Gemisch umfasst, und das Kältemittel-Öl-Gemisch den Spindelmechanismus (9) und die sich in dem Gehäuse (6) befindlichen Elemente des Spindelantriebs umströmt.

9. Elektronisches Expansionsorgan gemäß einem der Ansprüche 1 bis 8, wobei der erste Ein-/Auslassstutzen und der zweite Ein-/Auslassstutzen jeweils an der dem Gehäuse abgewandten Seite eine Anschlusseinrichtung (10a; 10b) aufweisen, um das elektronische Expansionsorgan (1) an einer Kältemittelverrohrung anzuschließen.

10. Elektronisches Expansionsorgan gemäß einem der Ansprüche 1 bis 9, weiterhin mit einem Stecker (15) zum Übertragen von Steuersignalen und Versorgungsenergie für den Spindelantrieb.
